# EUROPEAN PATENT APPLICATION

(11) **EP 2 372 579 A1**
(43) Date of publication of application: **05.10.2011**
(21) Application number: 10305339.3
(22) Date of filing: 01.04.2010
(51) Int. Cl.: G06F 17/30

(54) **Method and device for graphical presentation of multimedia documents**

(71) Applicant: Thomson Licensing, 92130 Issy-les-Moulineaux (FR)
(72) Inventor: Roussel, Joris, 92443, Issy-les-Moulineaux cedex (FR); baron, Guillaume, 92443, Issy-les-Moulineaux cedex (FR)
(74) Representative: Ruellan-Lemonnier, Brigitte

(57) **Abstract**

The present invention relates to a device for automatic analysis and graphical enhancement of multimedia documents comprising:
• An analysis module for performing a qualitative analysis and a quantitative analysis of a multimedia document, said qualitative analysis identifying media types and said quantitative analysis extracting an information weight; and
• An enhance module for formatting said multimedia document to another document in order to enhance its graphical representation, using the results obtained by said analysis module.

The present invention also relates to a method for automatic analysis and graphical enhancement of multimedia documents.

## Description

### FIELD OF THE INVENTION

The present invention pertains to the field of Information and Communication technologies.

The present invention more particularly relates to a method and to a device for automatic analysis and graphical enhancement of multimedia documents.

### BACKGROUND OF THE INVENTION

The present invention relates to content delivery, and more particularly to RSS *("Really Simple Syndication")* content delivery. RSS is a family of web feed formats used to publish frequently updated works-such as blog entries, news headlines, audio, and video-in a standardized format. An RSS document (which is called a "feed", "web feed" or "channel") includes full or summarized text, plus metadata such as publishing dates and authorship. Web feeds benefit publishers by letting them syndicate content automatically.

The present invention aims at providing RSS information to remote terminals (such as DECT handset, Wi-Fi tablet, Internet radio receiver ...) with design and content enhanced and adapted to them.

RSS technology offers a simple way to provide information to a terminal regardless how it will be rendered. This information is always organized as a list of items, composed of a title and a description. It is textual, can be graphically enhanced by adding an image (RSS *image* element) and HTML encoded content but it remains a list of items.

The existing way to graphically enhance and adapt a RSS content to a terminal is to extract information from the flow (temperature and weather condition for example) and to integrate them in a dedicated design. This system is commonly used for widget development (available in personal computer desktop, mobile phone ...) but it implies the perfect knowledge of the RSS flow providing the information. It also becomes dependent of it and any change of this latter can make it become out of service.

To summarize, the two existing possibilities are to display RSS information:
- in a generic way, as a list of titles and descriptions; or
- in a dedicated way, graphically improved but extremely linked to RSS content source.

More, remote terminals displaying information provided by RSS flow can be very different and an information meaningful for one terminal can be useless or unusable for another one.

Below is a Table (Table 1) giving some examples of RSS flow "styles", terminal examples and content interest for them:

**Table 1.**

| | Pure textual content | Content with images | Content with only links to external web pages | Content with audio podcast |
|---|---|---|---|---|
| DECT handset with text display | **Useful** | Poor | *Unusable* | *Unusable* |
| DECT handset with color graphic display | **Useful** | **Useful** | *Unusable* | *Unusable* |
| Wi-Fi tablet | Poor | **Useful** | **Useful** | **Useful** |
| Internet radio receiver | *Unusable* | *Unusable* | *Unusable* | **Useful** |

The table above (Table 1) shows a notion which is answered by the present invention: RSS browsers have affinities to information type depending on terminal capabilities.

### SUMMARY OF THE INVENTION

The present invention aims at solving the above-mentioned drawbacks of the prior art solutions.

The technical problem the present invention seeks to solve can be defined as: how to analyse and personalize information provided in a multimedia document?

The present invention is defined, in its broadest sense, as a device for automatic analysis and graphical enhancement of multimedia documents comprising:
- An analysis module for performing a qualitative analysis and a quantitative analysis of a multimedia document, said qualitative analysis identifying media types and said quantitative analysis extracting an information weight; and
- An enhance module for formatting said multimedia document to another document in order to enhance its graphical representation, using the results obtained by said analysis module.

Preferably, said analysis module provides a list of notes giving a profiling of the information provided in said multimedia document.

According to an embodiment, the formatting performed by said enhance module is performed by using the list of notes giving a profiling of the information provided in said multimedia document provided by said analysis module.

Advantageously, said media types are in the group of :
- HTML encoded (for text enhancement, link encoding);
- Existing images (none, some, all titles);
- Links to audio podcast;
- Links to video podcast;
- Keyword existence.

According to an embodiment, said information weight is in the group of:
- Title number;
- Title length;
- Description length.

Preferably, said enhance module is adapted to a browser terminal using a notion related to affinity.

According to an embodiment, said notion related to affinity belongs to the group of:
- display type (black and white, color, size);
- audio or video support;
- alert support; or
- a characteristic used to personalize the format of said multimedia document.

The present invention also relates to a method for automatic analysis and graphical enhancement of multimedia documents comprising:
- An analysis step for performing a qualitative analysis and a quantitative analysis of a multimedia document, said qualitative analysis identifying media types and said quantitative analysis extracting an information weight; and
- An enhance step for formatting said multimedia document to another document in order to enhance its graphical representation, using the results obtained by said analysis module.

The advantages provided by the present invention are the following:
- RSS documents are automatically analyzed and graphically enhanced.
- RSS documents are not displayed as a classical title list or with a proprietary widget (with strong link to content provided).
- Their display is adapted to their content (emphasis of images, keywords, title or description number, audio or video podcast automatically play...).
- Their display is adapted to terminal capabilities.
- The graphic enhance module is not linked to RSS document provider. It works with all standard RSS documents.
- Multiple RSS documents have their own way of display and user experience is enhanced with this graphic variety and richness.
- The separation between analysis and enhance modules allows to build a solution architecture where one or both modules can be combined in a server or a gateway to address different terminal types.

### BRIEF DESCRIPTION OF THE DRAWINGS

The following detailed description will be better understood with the drawings, in which:

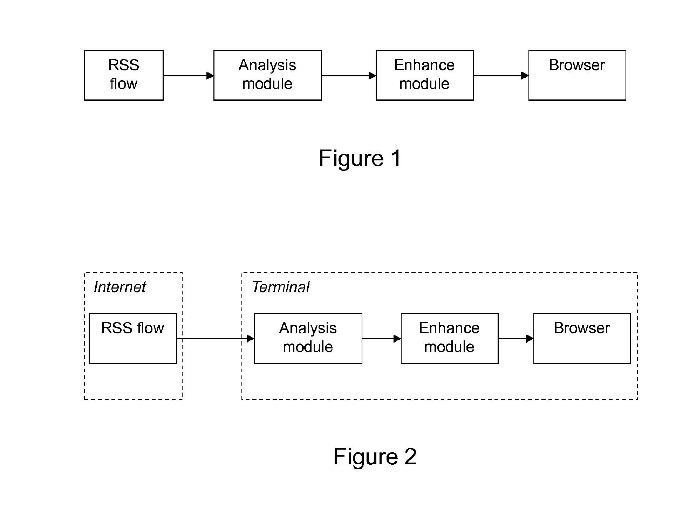

• Figure 1, 2, 3 and 4 show examples of architectures of the device according to the present invention.

### DETAILED DESCRIPTION OF THE EMBODIMENTS OF THE INVENTION

The device according to the present invention is composed of two modules. The first one analyses flow content, while the second one enhances its graphic representation.

In order to gain graphical freedom, the terminal browser can be another standard one such as a WML browser, where graphical design and user interaction can be better optimized.

Figure 1 represents an example of architecture of the device according to the invention.

The analysis and enhance modules can be embedded in the terminal. This architecture doesn't need a gateway or a server but implies more resources in the terminal.

Figure 2 represents another example of architecture of the device according to the invention.

The analysis and enhance modules can also be integrated in a gateway or server. This lightens terminals and modules can address different terminals.

Figure 3 represents another example of architecture of the device according to the invention.

The analysis module can be located in the terminal or in a remote server or gateway.

According to the present invention, the analysis relies on two categories, a qualitative and a quantitative analysis, each one composed of thematics. The analysis result is a list of notes which gives a profiling of the information provided.

The qualitative analysis aims at identifying media types. For example:
- HTML encoded (for text enhancement, link encoding, ...)
- existing images (none, some, all titles)
- links to audio podcast
- links to video podcast
- keyword existence (for alerts, ...)
- ...

The quantitative analysis aims at extracting different information weight, such as:
- title number
- title length
- description length
- ...

All these data give a document profile. This profile is composed of a list of attributes with a note representing its load in document profile.

The enhance module aims at formatting a RSS document to another document in order to enhance its graphical representation.

This formatting is made by using profile notes extracted by the analysis module. Rules are applied on these notes in order to perform a variety of graphical enhancement. This brings an initial "list" document to a complex and rich document, oriented towards a better user experience.

In the Table (Table 2) below are some examples of analysis and enhance modules results.

In the present Example:
Analysis module attributes are:
- N : number of titles
- I : number of titles with an image
- V : video podcast
Enhance module rules are:
- R1 : If only one title, directly display description ("if N=1")
- R2 : If all titles have an image, display all images as a matrix selector for items ("if N=I")
- R3 : Delete items with video podcast ("for any V")
Flows are:
- F1 : A flow with only one textual item (title+description)
- F2 : A flow of 10 items with 2 video podcast links and all titles with an image

**Table 2.**

| | **Analysis module** | | | **Enhance module** | | | **Result** |
|---|---|---|---|---|---|---|---|
| | **N** | **I** | **V** | **R1** | **R2** | **R3** | |
| **F1** | 1 | 0 | 0 | X | - | - | No title list. Description of unique title is directly displayed |
| **F2** | 10 | 10 | Items I2 and I3 | - | X | Remove I2 and I3 | 8 images displayed as a matrix selector for flow items |

With the affinity notion, the enhance module rules can be adapted to a browser terminal. This allows to provide enhanced information to different types of terminals (DECT handset, Wi-Fi tablet, Internet radio receiver ... ).

According to an embodiment, the browser sends (with a push or pull mechanism) its affinities to the enhance module. The affinities can be:
- display type (black and white, color, size, ...)
- audio or video support
- alert support
- or any other kind of characteristic that can be used to personalize the document format.

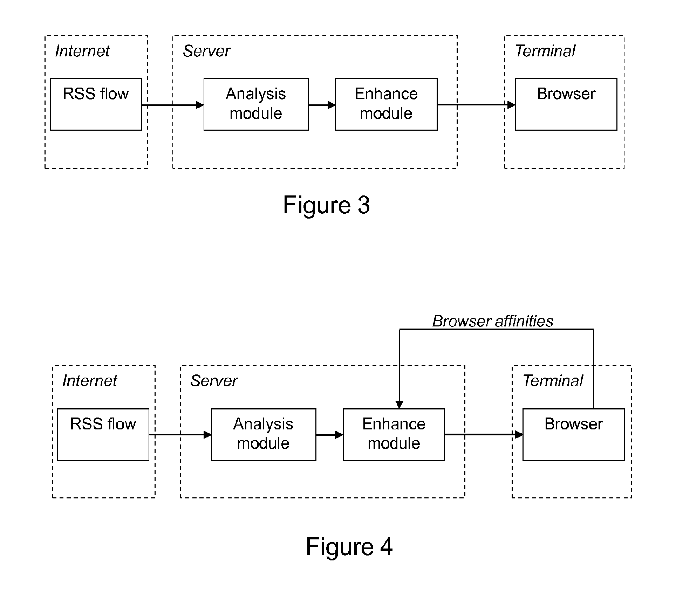

Figure 4 shows an example of the architecture of the device according to the present invention with the affinity notion.

Rules are then adapted to terminal characteristics in order to provide the user a friendly document, with deletion of all unusable elements and emphasize of all useful information.

The above specification, examples and drawings provide a complete description of the method according to the present invention. Since many embodiments of the invention can be made without departing from the spirit and scope of the invention, the invention resides in the claims herein after appended.

## Claims

1. Device for automatic analysis and graphical enhancement of multimedia documents comprising:
• An analysis module for performing a qualitative analysis and a quantitative analysis of a multimedia document, said qualitative analysis identifying media types and said quantitative analysis extracting an information weight; and
• An enhance module for formatting said multimedia document to another document in order to enhance its graphical representation, using the results obtained by said analysis module.

2. Device according to claim 1, **characterized in that** said analysis module provides a list of notes giving a profiling of the information provided in said multimedia document.

3. Device according to claim 2, **characterized in that** the formatting performed by said enhance module is performed by using the list of notes giving a profiling of the information provided in said multimedia document provided by said analysis module.

4. Device according to any of the previous claims, **characterized in that** said media types are in the group of :
• HTML encoded (for text enhancement, link encoding);
• Existing images (none, some, all titles);
• Links to audio podcast;
• Links to video podcast;
• Keyword existence.

5. Device according to any of the previous claims, **characterized in that** said information weight is in the group of:
• Title number;
• Title length;
• Description length.

6. Device according to any of the previous claims, **characterized in that** said enhance module is adapted to a browser terminal using a notion related to affinity.

7. Device according to claim 6, **characterized in that** said notion related to affinity belongs to the group of:
• display type (black and white, color, size);
• audio or video support;
• alert support; or
• a characteristic used to personalize the format of said multimedia document.

8. Method for automatic analysis and graphical enhancement of multimedia documents comprising:
• An analysis step for performing a qualitative analysis and a quantitative analysis of a multimedia document, said qualitative analysis identifying media types and said quantitative analysis extracting an information weight; and
• An enhance step for formatting said multimedia document to another document in order to enhance its graphical representation, using the results obtained by said analysis module.
